(19) Europäisches Patentamt
European Patent Office
Office européen des brevets

(11) Publication number: **0 191 319 A2**

(12) **EUROPEAN PATENT APPLICATION**

(21) Application number: 86100737.5

(22) Date of filing: 21.01.86

(51) Int. Cl.[4]: C 08 G 63/64, C 08 J 5/18

(30) Priority: 11.02.85 US 700096

(43) Date of publication of application: 20.08.86 Bulletin 86/34

(84) Designated Contracting States: DE FR GB IT NL

(71) Applicant: **GENERAL ELECTRIC COMPANY, 1 River Road, Schenectady New York 12305 (US)**

(72) Inventor: **Rosenquist, Niles Richard, 905 Varsity Drive, Evansville Indiana 47712 (US)**

(74) Representative: **Catherine, Alain et al, General Electric - Deutschland Munich Patent Operations Frauenstrasse 32, D-8000 München 5 (DE)**

(54) **Carbonate polymers.**

(57) Solvent cast films exhibiting improved haze comprised of a carbonate polymer containing the reaction products of
(i) at least one dihydric phenol;
(ii) a carbonate precursor; and
(iii) an amount effective to improve the haze of said films of at least one aromatic ester precursor.

EP 0 191 319 A2

# CARBONATE POLYMERS

## BACKGROUND OF THE INVENTION

Polycarbonates are well known thermoplastic materials which, due to their many advantageous properties, find use as thermoplastic engineering materials. The polycarbonates exhibit, for example, excellent properties of toughness, flexibility, and relatively high heat distortion temperatures. The conventional polycarbonates may generally be prepared by the reaction of a dihydric phenol such as bisphenol-A with a carbonate precursor such as phosgene.

However, relatively thin conventional polycarbonate resin films, particularly those prepared by the solvent casting process, exhibit somewhat less than ideal optical properties. More particularly, solvent cast films comprised of conventional polycarbonate resins exhibit a degree of haze which renders them useless in certain applications where optical clarity is critical.

It is an object of the instant invention to provide polycarbonate resins which may be used to form cast films exhibiting improved optical properties, particularly reduced haze.

## SUMMARY OF THE INVENTION

The instant invention is directed to carbonate polymers which are derived from (i) at least one dihydric phenol, (ii) a carbonate precursor, and (iii) a minor amount of an aromatic ester precursor.

More particularly, the instant invention is directed to films exhibiting improved optical properties comprised of a carbonate polymer derived from (i) at least one dihydric phenol, (ii) a carbonate precursor, and (iii) an amount effective to improve the optical properties of at least one aromatic ester precursor.

DESCRIPTION OF THE INVENTION

It has been discovered that carbonate polymers can be provided which, when formed into thin films, particularly those formed via the solvent casting process, yield films exhibiting improved optical properties, particularly reduced haze, as compared with films comprised of conventional polycarbonates.

These carbonate polymers are comprised of the reaction products of (i) at least one dihydric phenol, (ii) a carbonate precursor, and (iii) an aromatic ester precursor.

The aromatic ester precursors include the difunctional aromatic carboxylic acids, preferably the aromatic dicarboxylic acids, and the ester forming reactive derivatives thereof such as, for example, the acid dihalides.

Preferred aromatic ester precursors may be represented by the general formula

I. 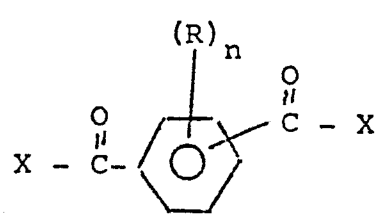

wherein:

R is independently selected from monovalent hydrocarbon radicals and halogen radicals;

X is independently selected from hydroxyl radicals and halogen radicals;

n is a positive integer having a value of from 0 to 4 inclusive; and

the $-\overset{\overset{O}{\|}}{C}-X$ are in the meta or para position relative to each other.

The monovalent hydrocarbon radicals represented by R include the alkyl radicals, cycloalkyl radicals, aryl radicals, alkaryl radicals and aralkyl radicals.

The preferred alkyl radicals are those containing from 1 to about 5 carbon atoms. Some illustrative non-limiting examples of these alkyl radicals include methyl, ethyl, propyl, isopropyl, butyl, tertiarybutyl, and pentyl.

The preferred cycloalkyl radicals are those containing from 4 to about 8 ring carbon atoms.

The preferred aryl radicals are those containing from 6 to 12 ring carbon atoms, i.e., phenyl, naphthyl and biphenyl.

The preferred aralkyl and alkaryl radicals are those containing from 7 to about 14 carbon atoms.

Preferred halogen radicals represented by R are the chlorine and bromine radicals.

The compounds of Formula I are well known in the art and are generally commercially available or may readily be prepared by known methods.

Some illustrative non-limiting examples of the compounds of Formula I include:

isophthalic acid;
terephthalic acid;
isophthaloyl dichloride; and
terephthaloyl dichloride.

In the practice of the instant invention only one aromatic ester precursor of Formula I may be used or a mixture of two or more different ester precursors may be employed.

The dihydric phenols useful in the preparation of the instant carbonate polymers may be represented by the general formula

II. 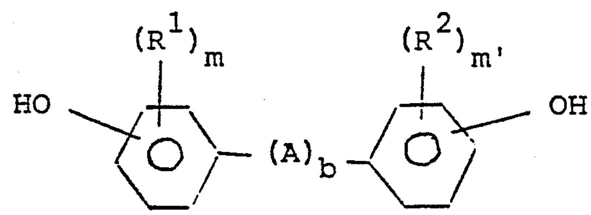

wherein:

$R^1$ and $R^2$ are independently selected from halogen, monovalent hydrocarbon, and monovalent hydrocarbonoxy radicals;

A is selected from divalent hydrocarbon radicals,

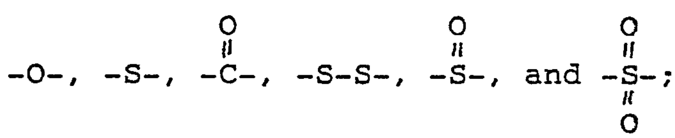

m and m' are independently selected from positive integers having a value of from 0 to 4 inclusive; and

b is either zero or one.

The monovalent hydrocarbon radicals represented by $R^1$ and $R^2$ include the alkyl, cycloalkyl, aryl, aralkyl, and alkaryl radicals.

Preferred alkyl radicals are those containing from 1 to about 10 carbon atoms. Preferred cycloalkyl radicals are those containing from 4 to about 8 ring carbon atoms. Preferred aryl radicals are those containing from 6 to 12 ring carbon atoms, i.e., phenyl, naphthyl and biphenyl. Preferred aralkyl and alkaryl radicals are those containing from 7 to about 14 carbon atoms.

The monovalent hydrocarbonoxy radicals represented by $R^1$ and $R^2$ have the general formula $-OR^3$ wherein $R^3$ is a monovalent hydrocarbon radical of the type described hereinafore for $R^1$ and $R^2$.

Preferred halogen radicals are chlorine and bromine.

The divalent hydrocarbon radicals represented by A include alkylene, alkylidene, cycloalkylene, and cycloalkylidene radicals. The preferred alkylene radicals are those containing from 2 to about 20 carbon atoms. The preferred alkylidene radicals are those containing from 1 to about 20 carbon atoms. The preferred cycloalkylene and cycloalkylidene radicals are those containing from 4 to about 16 ring carbon atoms.

Some illustrative non-limiting examples of dihydric phenols falling within the scope of Formula II include:

2,2-bis(4-hydroxyphenyl)propane (bisphenol-A);
1,1-bis(4-hydroxyphenyl)propane;
1,5-bis(4-hydroxyphenyl)pentane;
1,1-bis(4-hydroxyphenyl)decane;
2,2-bis(3,5-dimethyl-4-hydroxyphenyl)propane;
2,2-bis(3,5-dibromo-4-hydroxyphenyl)propane;

1,1-bis(4-hydroxyphenyl)cyclohexane;
1,1-bis(3,5-dimethyl-4-hydroxyphenyl)cyclohexane;
1,1-bis(3-methyl-5-chloro-4-hydroxyphenyl)cyclohexane;
1,3-bis(4-hydroxyphenyl)propane;
bis(4-hydroxyphenyl)ether;
p,p'-dihydroxydiphenyl;
4,4'-thiodiphenol; and
bis(3,5-diisopropyl-4-hydroxyphenyl)sulfone.

Other useful dihydric phenols are disclosed in U.S. Patent Nos. 3,169,121, 2,999,835, 3,027,365, 3,334,154, 3,035,021, 3,036,036, 3,036,037, 3,036,038, 3,036,039 and 4,111,910, all of which are incorporated herein by reference.

It is, of course, possible to employ a mixture of two or more different dihydric phenols as well as individual dihydric phenols in the preparation of the instant polymers.

The preferred dihydric phenols are the 4,4'-bisphenols such as, for example, bisphenol-A.

The carbonate precursor may be a carbonyl halide, a carbonate ester, or a bishaloformate. The carbonyl halides which may be employed herein are carbonyl bromide, carbonyl chloride, and mixtures thereof. Typical carbonate esters which may be used herein are the diaryl carbonates such as diphenyl carbonate; di(halophenyl)carbonates such as di(chlorophenyl)carbonate, di(bromophenyl) carbonate, di(trichlorophenyl)carbonate, etc.; di(alkylphenyl)carbonates such as di(tolyl)carbonate, etc.; phenyl tolyl carbonate; chlorophenyl chloronaphthyl carbonate, etc.; or mixtures thereof.

The bishaloformates suitable for use herein include the bishalformates of dihydric phenols such as the bischloroformate of hydroquinone, bischloroformate of bisphenol-A, and the like; or bishaloformates of glycols such as the bischloroformates of ethylene glyocl, polyethylene glycol, neopentyl glycol, and the like. The preferred carbonate precursor is carbonyl chloride, also known as phosgene.

A particularly useful method for preparing the instant carbonate polymers is the interfacial polymerization process utilizing, as the reactants, the aforedescribed dihydric phenols, carbonate precursor, and aromatic ester precursors, and also utilizing an aqueous caustic solution, a water immiscible organic solvent such as methylene chloride, a catalyst, and a molecular weight regulator.

The catalysts which may be employed are any of the well known catalysts which catalyze the carbonate polymer forming reaction. These catalysts include, but are not limited to, tertiary amines such as triethyl amine, tripropyl amine, N,N-dimethylaniline, quaternary phosphonium compounds, and quaternary ammonium compounds.

The molecular weight regulators are any of the known compounds that regulate the molecular weight of the polymer by a chain terminating mechanism. These compounds include, but are not limited to, phenol, tertiarybutyl phenol, and

chroman-I.

The amount of the aromatic ester precursor used in the preparation of the instant carbonate polymers is an optical property improving amount. By optical property improving amount is meant an amount which is effective to improve the optical properties of the solvent cast films, i.e., effective to reduce the haze of said films. Generally this amount is from about 1 to about 10 mole percent, preferably from about 2 to about 9 mole percent, and more preferably from about 3 to about 8 mole percent. Mole percent of the aromatic ester precursor is based on the total amounts of said ester precursor and said dihydric phenol utilized in the preparation of the carbonate polymer.

Generally, if less than about one mole percent of said ester precursor is used there is no significant improvement in the optical properties of the film. If more than about 10 mole percent of said ester precursor is used the polymer begins to lose the advantageous properties exhibited by polycarbonate resins.

The instant high molecular weight thermoplastic aromatic carbonate polymer contains recurring carbonate groups, carboxylate groups, and aromatic carbocyclic groups in the polymer chain in which at least some of the carbonate groups and at least some of the carboxylate groups are bonded directly to the ring carbon atoms of the aromatic carbocyclic groups.

The instant carbonate polymers contain ester bonds and carbonate bonds in the polymer chain

wherein the amount of the ester bonds is in the range of from about 1 to about 10 mole percent, preferably from about 2 to about 9 mole percent, and more preferably from about 3 to about 8 mole percent. For example, 5 moles of bisphenol-A reacting completely with 0.5 mole of isophthaloyl dichloride and 4.5 mole of phosgene would give a carbonate polymer of 10 mole percent ester bonds.

The instant carbonate polymers contain at least the following two recurring structural units:

III. 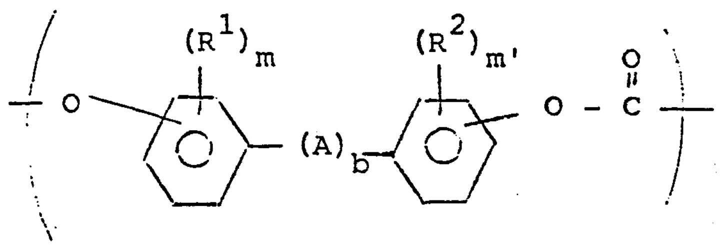 , and

IV. 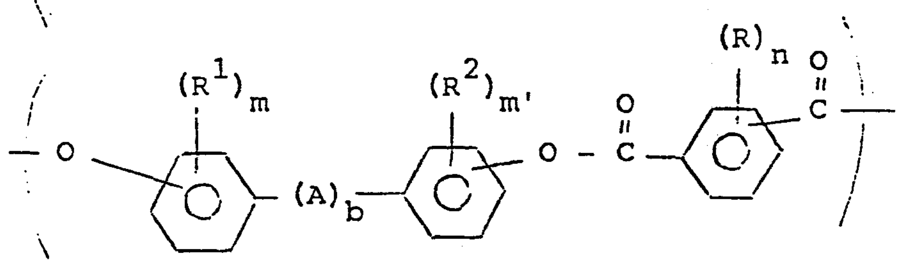

wherein R, $R^1$, $R^2$, A, m, m', n, and b are as defined hereinafore.

Units IV are present in amounts of from about 1 to about 10 mole percent, based on the total amounts of units III and IV present, depending on the amounts of the aromatic ester precursor used.

The instant high molecular weight thermoplastic aromatic carbonate polymers generally have an intrinsic viscosity, as measured in methylene chloride at 25°C, of at least about 0.5 dl/g, preferably at least about 0.6 dl/g.

Also included within the scope of the instant invention are the randomly branched thermoplastic aromatic carbonate polymers. These polymers are derived from (i) at least one dihydric phenol, (ii) a carbonate precursor, (iii) an aromatic ester precursor, and (iv) a minor amount of a branching agent. The branching agents are well known compounds and are generally aromatic compounds containing at least three functional groups which may be hydroxyl, carboxyl, carboxylic anhydride, haloformyl, or mixtures thereof. Some illustrative non-limiting examples of these polyfunctional aromatic compounds include trimellitic anhydride, trimellitic acid, trimellityl trichloride, 4-chloroformyl phthalic anhydride, pyromellitic acid, mellitic acid, mellitic anhydride, trimesic acid, benzophenone tetracarboxylic acid, and the like.

Also included herein are blends of linear and branched carbonate polymers.

The instant carbonate polymers may optionally have admixed therewith the commonly known and used additives such as, for example, antioxidants; ultraviolet radiation absorbers such as the cyanoacrylates, benzophenones, and benzotriazoles; hydrolytic stabilizers such as the epoxides disclosed in U.S. Patent Nos. 3,489,716, 3,138,379, and 3,839,247, all of which are hereby incorporated herein by reference; color stabilizers such as the organophosphites disclosed in U.S. Patent Nos. 3,305,520 and 4,118,370, both of which are incorporated herein by reference; and flame retardants.

The solvent cast films of the instant invention may be prepared by the conventional and well known solvent casting process which comprises dissolving the carbonate polymer in an organic solvent such as, for example, methylene chloride, pouring the solution into a template, and evaporating the solvent to form the film. These films generally have a thickness of from about 0.5 to about 25 mils, preferably from about 1 to about 15 mils.

DESCRIPTION OF THE PREFERRED EMBODIMENTS

In order that those skilled in the art may better understand how the instant invention may be practiced the following examples are set forth by way of illustration and not by way of limitation. In the examples all parts and percentages are on a weight basis unless otherwise indicated.

The following examples illustrate films prepared from conventional carbonate polymers falling outside the scope of the instant invention. These examples are presented for comparative purposes only.

EXAMPLE 1

This example illustrates a solvent cast film prepared from bisphenol-A polycarbonate resin.

A 1000 ml four neck flask is fitted with a mechanical stirrer, a pH probe, aqueous caustic inlet tube and a Claisen adapter to which is attached a dry ice condenser and a gas inlet tube. To the flask are added 300 ml water, 450

ml methylene chloride, 0.7 ml triethyl amine (0.005 mole), 57 g (0.25 mole) bisphenol-A, and 0.24 g (0.0016 mole) 4-tertiarybutyl phenol. With stirring the pH is raised to 10 by the addition of 25 % aqueous sodium hydroxide. Phosgene is introduced into the flask at a rate of 1 g/min for 30 minutes (0.3 mole) with the pH maintained at 10-11 by the use of said aqueous sodium hydroxide solution. The resin layer is separated from the brine layer, washed with 3 weight percent aqueous HCl until the washing remains acidic, and twice with distilled water. The resin is then precipitated into 1500 ml of methanol in a Waring blender, washed with 500 ml of methanol, and allowed to air dry.

A solvent cast film is prepared from this resin by dissolving 5 g of this resin in 95 g of methylene chloride and pouring the solution into a 5 in x 10 in stainless steel template resting on a glass plate. An inverted glass dish is loosely placed over the glass plate and the solvent is gradually evaporated.

Samples for % haze determination are cut from the center of the film. The % haze values are determined on a Gardner Pivotable-Sphere Hazemeter (Model HG-1204). The results are set forth in Table I.

## EXAMPLE 2

A resin blend is prepared by physically mixing together 6.25 weight percent of a copolyester-carbonate resin containing 75 mole % ester content, said ester content being

comprised of 93 mole percent isophthalate and 7 mole percent terephthalate (said resin being derived from bisphenol-A, phosgene, isophthaloyl dichloride, and terephthaloyl dichloride), and 93.75 weight percent of a bisphenol-A polycarbonate prepared substantially in accordance with the procedure of Example 1. The resulting blend contains about 5 weight percent esters.

This blend is then formed into a film substantially in accordance with the procedure of Example 1. The % haze of this film is determined and the results are set forth in Table I.

The following examples illustrate solvent cast films of the instant invention.

EXAMPLE 3

A 1000 ml four neck flask is fitted with a mechanical stirrer, a pH probe, aqueous caustic inlet tube and a Claisen adapter to which is attached a dry ice condenser and a gas inlet tube. To the flask are added 300 ml water, 450 ml methylene chloride, 0.7 ml triethyl amine (0.005 mole) 57 g (0.25 mole) bisphenol-A, 0.24 g (0.0016 mole) 4-tertiarybutyl phenol, and 0.0125 mole (5 mole % based on bisphenol-A) of terephthaloyl dichloride. With stirring the pH is raised to 10 by the addition of 25 % aqueous sodium hydroxide. Phosgene is introduced into the flask at the rate of 1 g/min for 30 minutes (0.3 mole) with the pH maintained at 10 to 11 by the use of said brine solution. The resin layer is separated from the brine layer, washed with 3 weight percent aqueous HCl until the washing remains acidic, and twice

with distilled water. The resin is then precipitated into 1500 ml of methanol in a Waring blender and washed with 500 ml more methanol and allowed to air dry.

This resin is then formed into a film substantially in accordance with the procedure of Example 1. The % haze of this film is determined and the results are set forth in Table I.

EXAMPLES 4-6

The procedure of Example 3 is substantially repeated except that the 0.0125 mole of terephthaloyl dichloride is replaced with 0.0125 mole of other aromatic ester precursors as set forth in Table I.

The % haze of these films is determined and the results are set forth in Table I.

TABLE I

| Example No. | Aromatic Ester Precursor | Mole % Ester Precursor | IV of resin* | % haze of film | thickness of film |
|---|---|---|---|---|---|
| 1 | - | 0 | 0.803 | 42.3 | 5 mils |
| 2 | 6.25 weight % copolyester-carbonate containing 75 mole % ester content comprised of 93 mole % isophthalate and 7 mole % terephthalate blended with 93.75 weight % bisphenol-A polycarbonate | the blend contains 5 weight % ester content | - | 39.0 | 5 mils |
| 3 | terephthaloyl dichloride | 5 | 0.596 | 5.7 | 4 mils |
| 4 | isophthaloyl dichloride | 5 | 0.816 | 5.7 | 5 mils |
| 5 | terephthalic acid | 5 | - ** | 22.7 | 5 mils |
| 6 | isophthalic acid | 5 | 0.959 | 5.0 | 4 mils |

* Intrinsic Viscosity as determined at 25°C in methylene chloride.

** Insoluble in methylene chloride.

As illustrated by the data in Table I the solvent cast films of the instant invention (Examples 3-6) exhibit improved optical properties, i.e., improved haze, as compared with conventional polycarbonate cast films containing no aromatic ester precursors (Example 1).

Comparsion of Examples 3-6 with Example 2 illustrates that the aromatic esters need be present in the polymer chain, rather than added to a conventional polycarbonate resin in the form of an ester containing resin, in order to improve the optical properties of a film formed of said resin.

~~The following detailed description has been given for clearness of understanding only and no unecessary limitations are to be understood therefrom. The invention is not limited to the exact details shown and described therein, for obvious modifications will occur to those skilled in the art.~~

WHAT IS CLAIMED IS:

1. Solvent cast film exhibiting improved haze comprised of at least one carbonate polymer containing the reaction products of

(i) at least one dihydric phenol;

(ii) a carbonate precursor; and

(ii) an amount effective to improve the haze of said film of at least one aromatic ester precursor.

2. The film of claim 1 wherein said amount of aromatic ester precursor is from about 1 to about 10 mole percent, based on the total amounts of said dihydric phenol and said aromatic ester precursor used.

3. The film of claim 2 wherein said amount of said aromatic ester precursor is from about 2 to about 9 mole percent.

4. The film of claim 3 wherein said amount of aromatic ester precursor is from about 3 to about 8 mole percent.

5. The film of claim 1 wherein said aromatic ester precursor is represented by the general formula

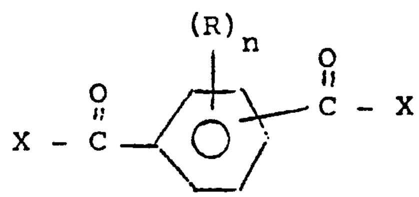

wherein:

R is independently selected from monovalent hydrocarbon radicals and halogen radicals;

n is a positive integer having a value of from 0 to 4 inclusive;

X is independently selected from hydroxyl and halogen radicals; and

the -COX radicals are in the meta or para position relative to each other.

6. The film of claim 5 wherein said monovalent hydrocarbon radicals represented by R are selected from alkyl, cycloalkyl, aryl, aralkyl and alkaryl radicals.

7. The film of claim 6 wherein said monovalent hydrocarbon radicals represented by R are selected from alkyl radicals.

8. The film of claim 5 wherein said halogen radicals represented by R are selected from chlorine and bromine.

9. The film of claim 5 wherein n is zero.

10. The film of claim 5 wherein X is a hydroxyl radical.

11. The film of claim 10 wherein n is zero.

12. The film of claim 11 wherein said aromatic ester precursor is selected from isophthlaic acid, terephthalic acid, and mixtures thereof.

13. The film of claim 5 wherein X is a halogen radical.

14. The film of claim 13 wherein said halogen radical is chlorine.

15. The film of claim 14 wherein n is zero.

16. The film of claim 15 wherein said aromatic ester precursor is selected from isophthaloyl dichloride, terephthaloyl dichloride, and mixtures thereof.

17. The film of claim 5 wherein said carbonate precursor is phosgene.

18. The film of claim 17 wherein said dihydric phenol is bisphenol-A.